# EUROPÄISCHE PATENTSCHRIFT

(11) **EP 2 058 585 B1**
(45) Veröffentlichungstag und Bekanntmachung des Hinweises auf die Patenterteilung: **30.05.2012**
(21) Anmeldenummer: 08450171.7
(22) Anmeldetag: 05.11.2008
(51) Int. Cl.: F21S 8/12, F21K 99/00, F21Y 101/02

(54) **Lichtquelle für einen Fahrzeugscheinwerfer bzw. eine Lichteinheit eines Fahrzeugscheinwerfers**
Light source for a vehicle headlamp or a light unit of a vehicle headlamp
Source de lumière pour un phare de véhicule automobile ou unité d'éclairage d'un phare de véhicule automobile

(30) Priorität: 07.11.2007 AT 17892007
(43) Veröffentlichungstag der Anmeldung: 13.05.2009
(73) Patentinhaber: Zizala Lichtsysteme GmbH, 3250 Wieselburg (AT)
(72) Erfinder: Böhm, Gerald, 3370 Ybbs (AT)
(74) Vertreter: Patentanwaltskanzlei Matschnig & Forsthuber OG

(56) Entgegenhaltungen:
- DE-A1- 10 153 031
- DE-A1- 10 205 779
- DE-A1- 10 303 430
- DE-A1- 10 314 524
- DE-A1-102005 041 234
- US-A1- 2004 085 779

## Beschreibung

Die Erfindung betrifft eine Lichtquelle für einen Fahrzeugscheinwerfer bzw. eine Lichteinheit eines Fahrzeugscheinwerfers, wobei das von der Lichtquelle emittierte Licht über einen Reflektor in den Außenraum des Scheinwerfers bzw. der Lichteinheit reflektiert wird, und wobei die Lichtquelle aus einer Anzahl von Leuchtdioden aufgebaut ist, welche Leuchtdioden einzeln und/oder in Gruppen zusammen gefasst ansteuerbar sind, wobei die Leuchtdioden in einer gemeinsamen Lichtquellenebene liegen, und wobei je eine oder mehrere Leuchtdioden unterschiedliche Lichtemissionsbereiche bilden.

Weiters betrifft die Erfindung eine Lichteinheit mit einer solchen Lichtquelle mit zumindest einem Reflektor, wobei der zumindest eine Reflektor sich im Wesentlichen oberhalb/unterhalb der Lichtquellenebene erstreckt, und schließlich betrifft die Erfindung noch einen Scheinwerfer mit zumindest einer solchen Lichteinheit.

Außerdem betrifft die Erfindung auch noch einen Reflektor für eine entsprechende Lichteinheit bzw. einen Fahrzeugscheinwerfer.

Im Kraftfahrzeugbau werden in letzter Zeit vermehrt Leuchtdioden zur Realisierung von Hauptscheinwerferfunktionen verwendet. Weiters gehen Bestrebungen dahin, neben den derzeit bekannten Lichtfunktionen wie Abblendlicht und Fernlicht weitere Lichtfunktionen mit einem Hauptscheinwerfer zu realisieren, wie zusätzlich etwa Autobahnlicht, Schlechtwetterlicht und Tagfahrlicht zu realisieren. Ein derartiger KFZ-Scheinwerfer ist in DE- 10153031 A offenbart.

Bei Verwendung von Leuchtdioden ist dazu die Verwendung eigener LED-Module, von denen jedes einen eigenen Reflektor und/oder eine eigene Linse benötigt, für jede Lichtfunktion notwendig, was in nachteiliger Weise mit erhöhten Kosten und vergleichsweise viel Bauraum verbunden ist.

Es ist eine Aufgabe der Erfindung, mit einem einzigen Leuchtdioden-Modul mehrere unterschiedliche Hauptscheinwerfer-Lichtfunktionen realisieren zu können.

Diese Aufgabe wird mit dem Merkmalen von Anspruch 1 gelöst.

Durch die Verwendung einer erfindungsgemäßen Lichtquelle können im Zusammenwirken mit lediglich einem für die Lichtquelle berechneten Reflektor auf einfache Weise zwei Lichtfunktionen, nämlich eine Abblendlichtfunktion und ein eine Schlechtwetterlichtverteilung realisiert werden.

Um die Vielseitigkeit der Lichtquelle noch weiter zu erhöhen, ist bei einer vorteilhaften Variante vorgesehen, dass sich weiters zu beiden Seiten der Längsgeraden, unmittelbar oder mit Abstand anschließend an den ersten Lichtemissionsbereich, je ein zweiter Lichtemissionsbereich im Wesentlichen parallel zu den Berechnungsgeraden erstreckt. Mit diesen zweiten Lichtemissionsbereichen kann ein Autobahnlicht realisiert werden.

Um dabei zu vermeiden, dass Licht über die Hell-Dunkel-Grenze gelangt, ist es günstig, wenn die zweiten Lichtemissionsbereiche vollständig in dem ersten, von den beiden Berechnungsgeraden begrenzten Unterteilungsbereich liegen und im Wesentlichen parallel zu der zweiten Berechnungsgeraden und unmittelbar oder mit geringem Abstand an diese anschließend liegen.

Um eine Fernlichtfunktion realisieren zu können, kann vorgesehen sein, dass ein dritter Lichtemissionsbereich in dem zweiten Unterteilungsbereich anschließend an den ersten Lichtemissionsbereich, von diesem durch die zweite Berechnungsgerade getrennt, vorgesehen ist.

Dieser "dritte" Lichtemissionsbereich ist vorzugsweise zusätzlich zu dem zweiten Lichtemissionsbereich vorgesehen, da dann mit einer einzigen Lichtquelle bereits vier Lichtfunktionen realisiert werden können; falls eine Autobahnlichtfunktion nicht notwendig ist, kann der zweite Bereich aber auch entfallen.

Um bei den Lichtstärken der derzeit erhältlichen Leuchtdioden eine ausreichende Helligkeit der Fernlichtverteilung zu erreichen, ist vorgesehen, dass der dritte Lichtemissionsbereich eine längliche, sich parallel zu der zweiten Berechnungsgeraden und zu beiden Seiten der Längsgeraden erstreckende Gestalt aufweist.

Im Falle einer stärkeren Leuchtdiode kann es aber auch ausreichend sein, wenn sich der dritte Lichtemissionsbereich lediglich in einem konzentrierten Bereich mit geringer seitlicher Ausdehnung, unmittelbar anschließend an den ersten Lichtemissionsbereich erstreckt.

Um noch eine Tagfahrlichtverteilung erzeugen zu können, ist bei einer konkreten Variante vorgesehen, dass anschließend an den dritten Lichtemissionsbereich ein vierter, sich entlang der Längsgeraden von der zweiten Berechnungsgeraden weg erstreckender Lichtemissionsbereich vorgesehen ist.

Je nach Lichtstärke der verwendeten Leuchtdioden weist der vierte Lichtemissionsbereich eine längliche Erstreckung entlang der Längsgeraden auf.

Die verwendeten Leuchtdioden weisen (makroskopisch betrachtet) eine ebene Lichtaustrittsfläche auf, und die Lichtaustrittsflächen aller Leuchtdioden liegen in einer gemeinsamen Lichtquellenebene. Auf diese Weise ist die Lichtquelle einfach herzustellen und auch lichttechnisch gut beherrschbar.

Üblicherweise weisen dabei die Leuchtdioden im Wesentlichen quadratische oder rechteckige Lichtaustrittsflächen auf, im Prinzip ist aber jede beliebige Form denkbar.

Um eine möglichst exakte, gesetzeskonforme Lichtverteilung zu erhalten, ist üblicherweise vorgesehen, dass ein Lichtemissionsbereich in seiner Quererstreckung genau aus einer Leuchtdiode und in seiner Längserstreckung aus einer oder mehreren Leuchtdioden besteht. "Quererstreckung" bezieht sich dabei auf die Erstreckung entlang der kürzeren, "Längserstreckung" auf jene entlang der längeren Seite, steht aber mit der Ausrichtung des Lichtemissionsbereiches an sich nicht in Zusammenhang.

Um eine optimale Realisierung aller Lichtfunktionen möglich zu machen, ist es von Vorteil, wenn auch die Leuchtdioden eines Lichtemissionsbereiches voneinander getrennt ansteuerbar sind, und nicht nur die einzelnen Lichtemissionsbereiche voneinander getrennt. Unter "Ansteuern" ist dabei in erster Linie das Ein- und Ausschalten der Leuchtdioden zu verstehen, es kann aber auch zweckmäßig sein, wenn die Lichtemissionsbereiche oder einzelne Leuchtdioden eines Lichtemissionsbereiches zusätzlich dimmbar sind.

Für eine besonders einfache Ermittlung der Reflektorform, bei dem es sich um einen Freiflächenreflektor handelt, ist es zweckmäßig, wenn die erste Begrenzungsgerade in dem über den Reflektor abgebildeten Lichtbild im Wesentlichen die Begrenzung der Vorfeldlichtverteilung darstellt und die zweite Begrenzungsgerade im Wesentlichen die Hell-Dunkel-Grenze darstellt.

Zur Ermittlung der Form des Reflektors ist dann lediglich der erste Lichtemissionsbereich ausschlaggebend, wodurch sich eine vergleichsweise einfache Berechnung der Reflektorform ergibt.

Bei einer erfindungsgemäße Lichteinheit mit einer Lichtquelle wie oben beschrieben und mit zumindest einem Reflektor erstreckt sich der zumindest eine Reflektor im Wesentlichen oberhalb/unterhalb der Lichtquellenebene, wobei die erste Begrenzungsgerade dem Reflektor abgewandt/zugewandt und die zweite Berechnungsgerade dem Reflektor zugewandt/abgewandt ist, und wobei die Lichtabstrahlrichtung der Lichtquelle im Wesentlichen nach oben/unten gerichtet ist.

Wenn ein halbkugelförmiges Design der Lichteinheit erwünscht ist, kann auch vorgesehen sein, dass ein Reflektor oberhalb und ein zweiter Reflektor unterhalb einer Lichtquellenebene angeordnet ist, wobei jedem Reflektor eine eigene erfindungsgemäße Lichtquelle zugeordnet ist.

Auch wenn es sich von der Funktion her um "eine" Lichtquelle handelt, kann diese natürlich aus mehreren "Unter"lichtquellen aufgebaut sein, d.h. die einzelnen Leuchtdioden oder Funktionsgruppen von Leuchtdioden können auf unterschiedlichen Leuchtdioden-Modulen angeordnet sein, welche Module dann derart angeordnet werden, dass sich eine entsprechende erfindungsgemäße Lichtquelle ergibt. Dies kann aus kühlungstechnischen Gründen von Vorteil sein.

Wesentlich einfacher hinsichtlich der exakten Fertigung und auch in Hinblick auf Ansteuerung und Energieversorgung ist es aber, wenn alle Leuchtdioden der Lichtquelle auf einem gemeinsamen Leuchtdioden-Modul angeordnet sind.

Im Folgenden ist die Erfindung an Hand der Zeichnung näher erläutert. In dieser zeigt
Fig. 1 schematisch eine perspektivische Ansicht einer erfindungsgemäßen Lichtquelle mit einem Reflektor,
Fig. 2a einen schematischen Vertikalschnitt durch eine erste erfindungsgemäße Lichteinheit,
Fig. 2b einen schematischen Vertikalschnitt durch eine zweite erfindungsgemäße Lichteinheit,
Fig.2c einen schematischen Vertikalschnitt durch eine dritte erfindungsgemäße Lichteinheit,
Fig. 3 eine Draufsicht auf eine schematische Darstellung der Lichtemissionsbereiche einer erfindungsgemäßen Lichtquelle,
Fig.4 eine konkrete Leuchtdiodenanordnung in den Lichtemissionsbereichen zur Realisierung einer erfindungsgemäßen Lichtquelle,
Fig.5 die zur Erzeugung einer Abblendlichtverteilung aktivierten Leuchtdioden einer Lichtquelle aus Figur 4,
Fig. 6 die mit der Lichtquelle aus Figur 5 realisierte Abblendlichtverteilung,
Fig. 7 die zur Erzeugung einer Schlechtwetterlichtverteilung aktivierten Leuchtdioden einer Lichtquelle aus Figur 4,
Fig. 8 die mit der Lichtquelle aus Figur 7 realisierte Schlechtwetterlichtverteilung,
Fig. 9 die zur Erzeugung einer Autobahnlichtverteilung aktivierten Leuchtdioden einer Lichtquelle aus Figur 4,
Fig. 10 die mit der Lichtquelle aus Figur 9 realisierte Autobahnlichtverteilung,
Fig. 11 die zur Erzeugung einer Fernlichtverteilung aktivierten Leuchtdioden einer Lichtquelle aus Figur 4,
Fig. 12 die mit der Lichtquelle aus Figur 11 realisierte Fernlichtverteilung,
Fig. 13 die zur Erzeugung einer Tagfahrlichtverteilung aktivierten Leuchtdioden einer Lichtquelle aus Figur 4,
Fig. 14 die mit der Lichtquelle aus Figur 13 realisierte Tagfahrlichtverteilung, und
Fig. 15 ein Leuchtdiodenmodul mit einer erfindungsgemäßen Leuchtdioden-Lichtquelle.

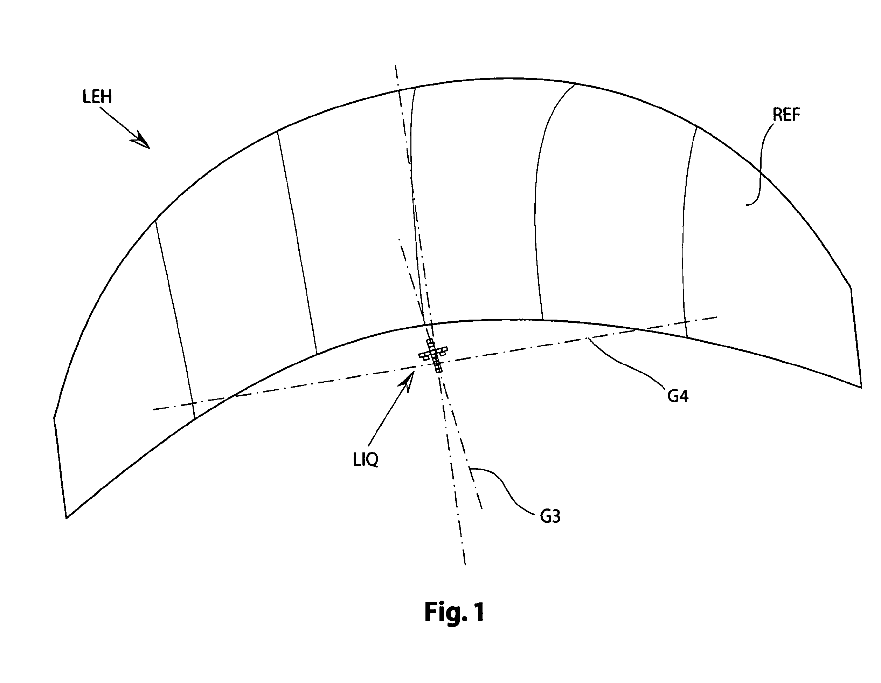

Figur 1 zeigt schematisch eine Darstellung der lichttechnisch relevanten Bestandteile einer erfindungsgemäßen Lichteinheit LEH (bzw. eines entsprechenden Scheinwerfers), nämlich eine erfindungsgemäße Lichtquelle LIQ, welche aus einer Reihe von Leuchtdioden aufgebaut ist, die in einer gemeinsamen Ebene liegen und Licht über einen Reflektor, welcher in diesem Fall oberhalb der gemeinsamen Ebene der Leuchtdioden angeordnet ist, in den Außenraum der Lichteinheit LEH abstrahlen.

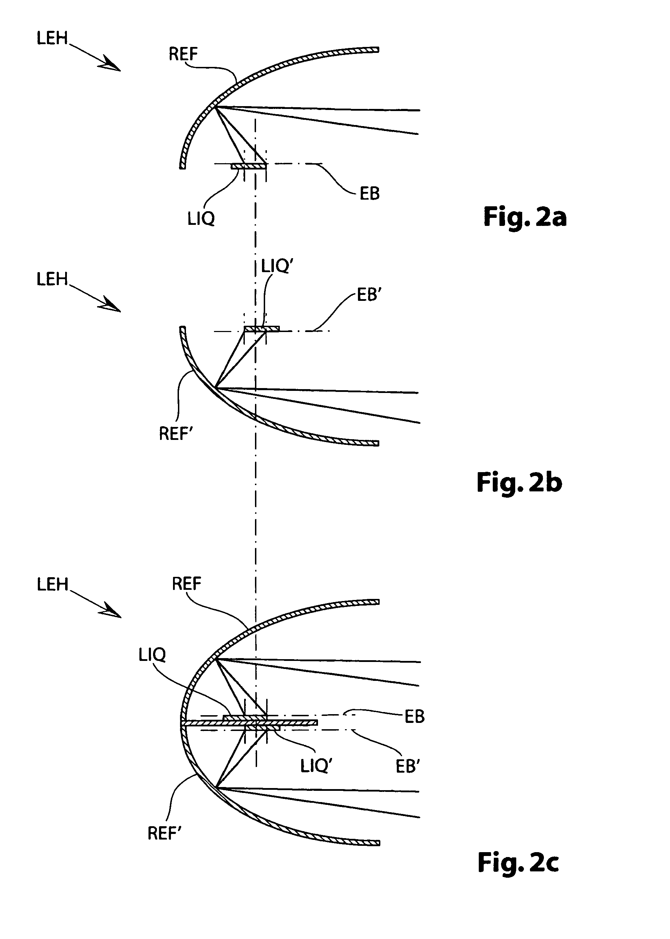

Fig. 2a zeigt einen Vertikalschnitte durch eine solche Lichteinheit LEH, mit der Lichtquelle LIQ und der gemeinsamen Ebene EB der Leuchtdiode, welche Licht nach oben abstrahlen, sowie einem zugeordneten Reflektor REF, dessen reflektierende Fläche sich ausgehend in etwa von der Ebene EB oberhalb der Lichtquelle LIQ erstrecken.

Fig. 2b zeigt einen vom Prinzip her gleichen Aufbau aus Lichtquelle LIQ' mit der Ebene EB' sowie einem Reflektor REF' mit dem Unterschied, dass hier die Lichtquelle LIQ' das Licht nach unten emittiert und entsprechend der Reflektor REF' sich nach unten erstreckt. Die Lichtquelle LIQ' kann einen völlig identischen Aufbau zu der Lichtquelle LIQ aus Fig. 2a aufweisen, allerdings ist die Orientierung der Lichtquelle LIQ' eine andere, was weiter unten noch näher erörtert wird; auch der Reflektor REF' ist jenem aus Fig. 2a sehr ähnlich, allerdings nicht identisch.

Fig. 2c zeigt schließlich noch eine Lichteinheit LEH mit einem im Wesentlichen halbkugelförmigen Reflektor, der aus zwei Reflektorhälften REF, REF' besteht, wobei jeder Hälfte REF, REF' eine eigene Lichtquelle LIQ, LIQ' entsprechend Fig. 2a und 2b zugeordnet ist.

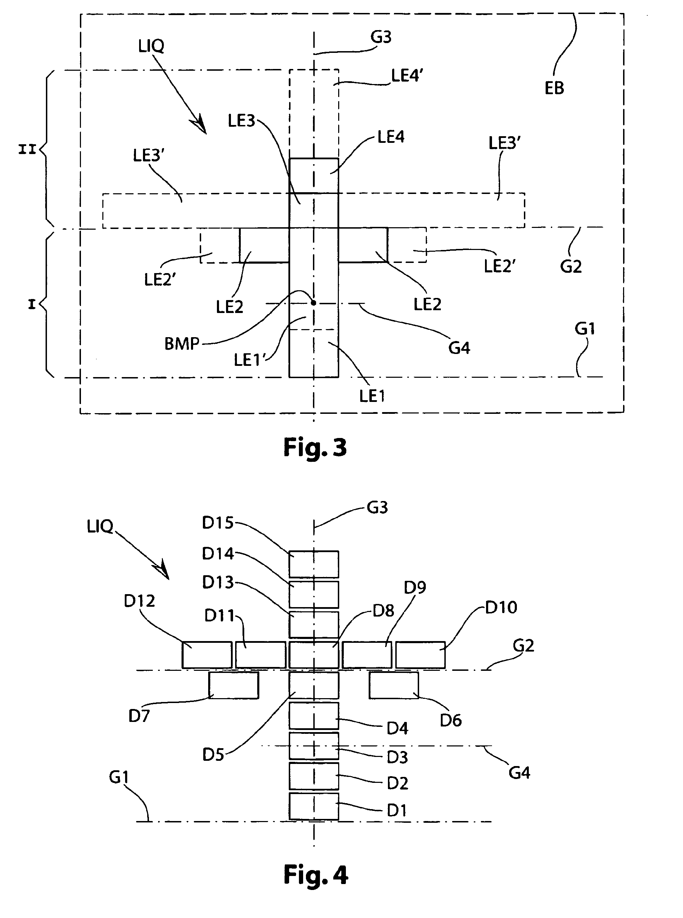

Figur 3 zeigt nun den grundsätzlichen Aufbau einer erfindungsgemäßen Lichtquelle LIQ. Die Lichtquelle LIQ besteht aus einer Anzahl von Leuchtdioden, die in einer gemeinsamen Lichtquellenebene EB liegen. Je eine oder mehrere Leuchtdioden bilden unterschiedliche Lichtemissionsbereiche LE1, LE2, LE2', LE3, LE3', LE4, LE4' bilden. Licht aus diesen unterschiedlichen Lichtemissionsbereichen wird über den Reflektor an unterschiedliche Stellen vor der Lichteinheit bzw. dem Fahrzeug abgestrahlt, und es können auf diese Weise unterschiedliche Lichtverteilungen realisiert werden.

Die Leuchtdioden der einzelnen Lichtemissionsbereiche können nun unabhängig von dem Leuchtdioden anderer Lichtemissionsbereiche angesteuert werden, und dementsprechend können die einzelnen Lichtemissionsbereiche unabhängig voneinander ein- und ausgeschaltet werden. Weiters ist es noch von Vorteil, wenn einzelne oder alle Lichtemissionsbereiche dimmbar sind.

Noch flexibler wird die Lichtquelle LIQ, wenn auch in bestimmten oder allen Lichtemissionsbereichen die einzelnen Leuchtdioden oder zumindest Gruppen von Leuchtdioden unabhängig von den anderen Leuchtdioden des Lichtemissionsbereiches angesteuert werden können (ein- und ausschalten und vorzugsweise auch noch dimmen):

Was den konkreten Aufbau der Lichtquelle LIQ betrifft, ist die Lichtquellenebene EB mittels einer ersten und einer zweiten Berechnungsgeraden G1, G2, welche parallel zueinander verlaufen, in zwei Unterteilungsbereiche I, II unterteilt. Ein erster, länglicher Lichtemissionsbereich LE1 erstreckt sich entlang einer normal auf die Berechnungsgeraden G1, G2 stehenden Längsgeraden G3 im Wesentlichen von der ersten bis zur zweiten Berechnungsgeraden G1, G2.

Dieser erste Lichtemissionsbereich LE1 ist aus mehreren Leuchtdioden D1 - D5 aufgebaut, wie dies z.B. in Figur 4 beispielhaft angedeutet ist, wo dieser erste Lichtemissionsbereich LE1 aus fünf Leuchtdioden D1 - D5 besteht (natürlich ist auch eine andere Anzahl von Leuchtdioden möglich).

Dieser erste Lichtemissionsbereich LE1 dient in erster Linie zur Realisierung einer Abblendlichtverteilung. Die Ermittlung der Reflektorform, bei dem es sich um einen Freiflächenreflektor handelt, erfolgt dabei dermaßen, dass die erste Begrenzungsgerade G1 in dem über den Reflektor REF abgebildeten Lichtbild im Wesentlichen die Begrenzung der Vorfeldlichtverteilung darstellt und die zweite Begrenzungsgerade G2 im Wesentlichen die Hell-Dunkel-Grenze darstellt. Dies ist dahingehend zu verstehen, dass Licht aus der Nähe der jeweiligen Geraden G1, G2 über den Reflektor entsprechend abgebildet wird, die Geraden selbst sind nur Hilfsgrößen zur Definition der einzelnen Bereiche.

Zur Ermittlung der Form des Reflektors REF wird bevorzugter Weise lediglich der erste Lichtemissionsbereich LE1 herangezogen, wodurch sich eine vergleichsweise einfach Berechnung der Reflektorform ergibt.

Eine weitere Berechnungsgerade, die sogenannte Berechnungsmittelpunktgerade G4 verläuft parallel und in annähernd gleichem Abstand zu den beiden Berechnungsgeraden G1, G2 und der Schnittpunkt mit der Längsgeraden G3 bildet den Berechnungsmittelpunkt BMP, welcher dem Mittelpunkt einer "konventionellen" Lichtquelle mit einer Abblendlichtwendel entspricht und für die Berechnung des Reflektors von Bedeutung ist.

Jene Leuchtdioden D3 - D5, welche sich von der einen Begrenzungsgeraden G2, welche die beiden Unterteilungsbereiche I, II voneinander trennt, bis im Wesentlichen zu der zu dieser Begrenzungsgeraden G2 parallel verlaufenden Berechnungsgeraden G4 erstrecken, lassen sich unabhängig von den restlichen Leuchtdioden D1, D2 des ersten Lichtemissionsbereichs ansteuern. Dadurch können auf einfache Weise zwei Lichtfunktionen, nämlich eine Abblendlichtfunktion und eine Schlechtwetterlichtverteilung realisiert werden.

Bei dem gezeigten Beispiel handelt es sich um eine konkrete Variante der Erfindung. Grundsätzlich ist es aber auch möglich, eine Schlechtwetterlichtverteilung z.B. auch nur mit der zu der Geraden G2 nächstgelegene Leuchtdiode D5 oder durch Aktivieren von D5 und D4 zu erzeugen. Falls mehr Vorfeld in der Lichtverteilung gewünscht ist, können auch die Dioden D2 - D5 aktiviert sein für die Schlechtwetterverteilung.

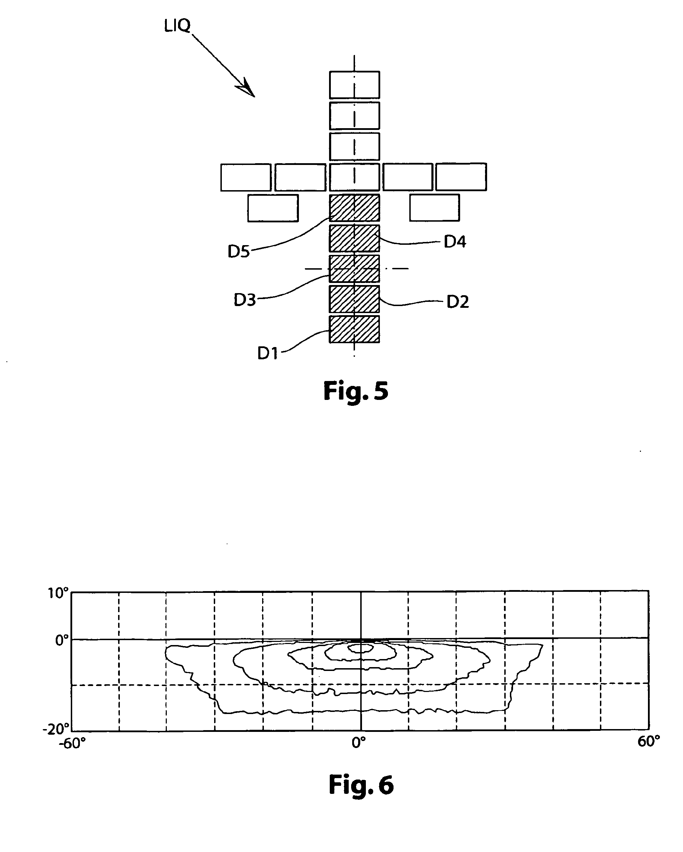

Figur 5 zeigt die erfindungsgemäße Lichtquelle LIQ, bei der alle Leuchtdioden D1 - D5 des ersten Lichtemissionsbereichs LE1 eingeschaltet sind. Die entsprechende Abblendlichtverteilung ist schematisch in Figur 6 dargestellt.

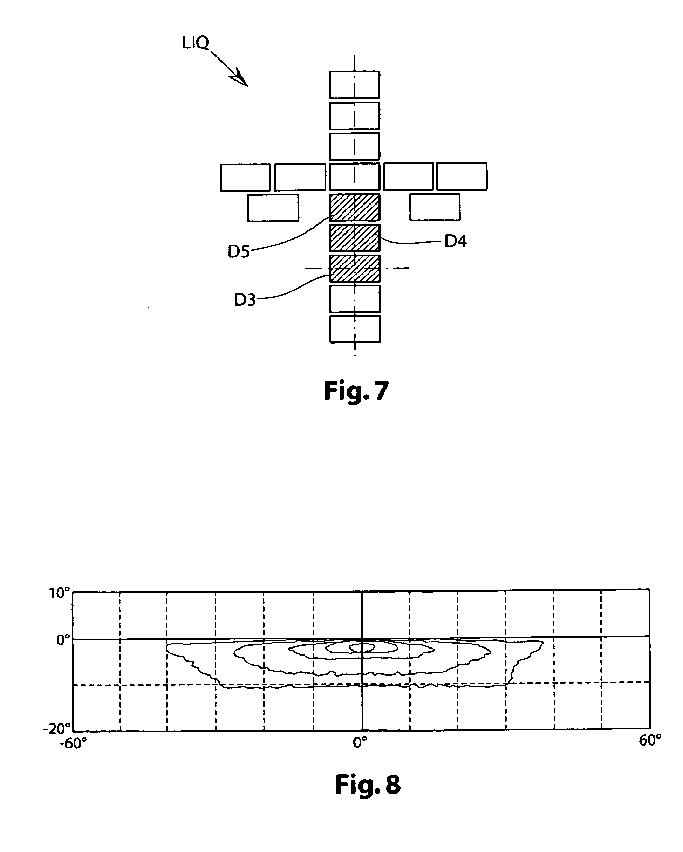

Gemäß Figur 7 sind lediglich die oberen drei Leuchtdioden D3 - D5 aktiviert, auf diese Weise wird eine Schlechtwetterlichtverteilung realisiert (Figur 8), bei welcher das Vorfeld weniger stark oder gar nicht ausgeleuchtet wird, um Blendungen zu vermeiden.

Um die Vielseitigkeit der Lichtquelle erhöhen, erstrecken sich weiters zu beiden Seiten der Längsgeraden G3, unmittelbar oder mit Abstand anschließend an den ersten Lichtemissionsbereich LE1, je ein zweiter Lichtemissionsbereich LE2, LE2' im Wesentlichen parallel zu den Berechnungsgeraden G1 G2 (Figur 3). Mit diesen zweiten Lichtemissionsbereichen kann ein Autobahnlicht realisiert werden.

Von Vorteil ist es, wenn der Bereich wie in Figur 3 mit LE2 bezeichnet unmittelbar an den ersten Lichtemissionsbereich LE1 anschließt. Je nach Lichtstärke der Leuchtdioden und um die gewünschte bzw. vorgeschriebene Ausleuchtung der Fahrbahn zu erreichen kann sich der Bereich auch weiter nach links und rechts erstrecken (Bereich LE2').

Wie in Figur 4 dargestellt, muss auch nicht der gesamte Bereich leuchtend ausgebildet sein, sondern es kann sich der zweite Bereich auch in einem Abstand von dem ersten Bereich befinden, wie dies mit den Leuchtdioden D6, D7 gemäß Figur 4 und folgende aus technischen Gründen realisiert ist.

Optimal ist es aber, wenn die Leuchtdioden D6, D7 so nahe wie möglich an den Lichtemissionsbereich LE1 anschließen, da sich dadurch wesentliche lichttechnische Vorteile ergeben. Ein Abstand zu LE1 kann aber nötig sein um eine optimale Kontaktierung (elektrische Versorgung) der Leuchtdioden D6, D7 zu gewährleisten, was dann aber mit lichttechnischen Nachteilen verbunden ist.

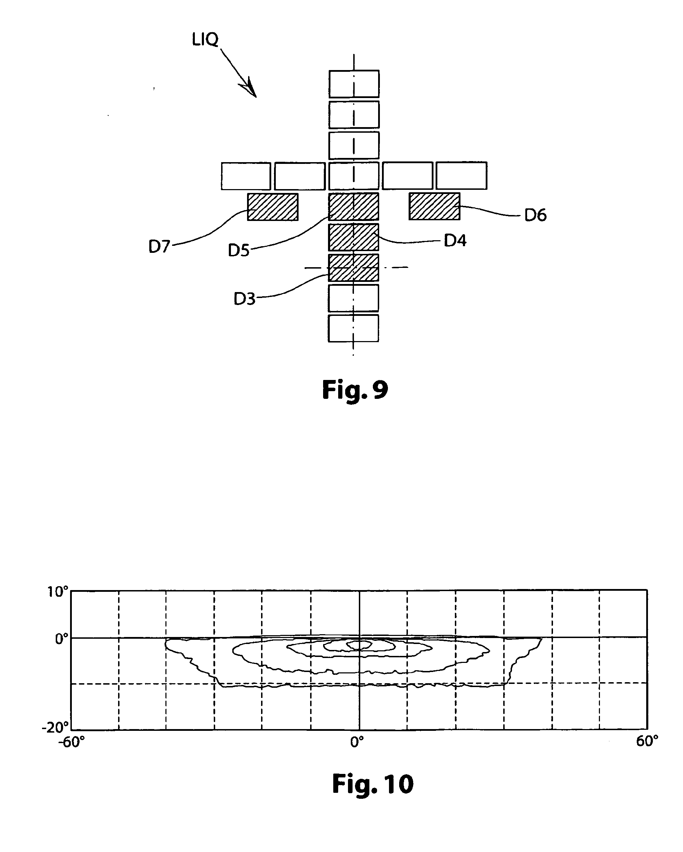

Aktiviert man die Dioden D6, D7 zusammen mit den Dioden D3 - D5 aus dem ersten Bereich, dann erhält man eine Autobahnlichtverteilung (Figur 10).

Um dabei zu vermeiden, dass Licht über die Hell-Dunkel-Grenze gelangt, ist es günstig, wenn die zweiten Lichtemissionsbereiche LE2, LE2' vollständig in dem ersten, von den beiden Berechnungsgeraden G1 G2 begrenzten Unterteilungsbereich I liegen und im Wesentlichen parallel zu der zweiten Berechnungsgeraden G2 und unmittelbar oder mit geringem Abstand an diese anschließend liegen.

Um eine Fernlichtfunktion realisieren zu können, ist gemäß Figur 3 weiters ein dritter Lichtemissionsbereich LE3, LE3' in dem zweiten Unterteilungsbereich II anschließend an den ersten Lichtemissionsbereich LE1, von diesem durch die zweite Berechnungsgerade G2 getrennt, vorgesehen. Der Reflektor ist dabei so ausgelegt, dass Licht von den Leuchtdioden D8 - D12 im Wesentlichen in den HV-Bereich emittiert wird. Dies ergibt die nötige/maximale Reichweite und die HD-Linie verschwindet.

Bei ausreichend starken Leuchtdioden ist ein kleiner Bereich LE3, der üblicherweise mit lediglich einer Leuchtdiode bestückt ist, zur Realisierung einer Fernlichtverteilung ausreichend. Bei schwächeren Leuchtdioden weist der dritte Lichtemissionsbereich LE3' wie dargestellt eine längliche, sich parallel zu der zweiten Berechnungsgeraden G2 und zu beiden Seiten der Längsgeraden G3 erstreckende Gestalt auf, in welcher mehrere Leuchtdioden D8 - D12 angeordnet sind.

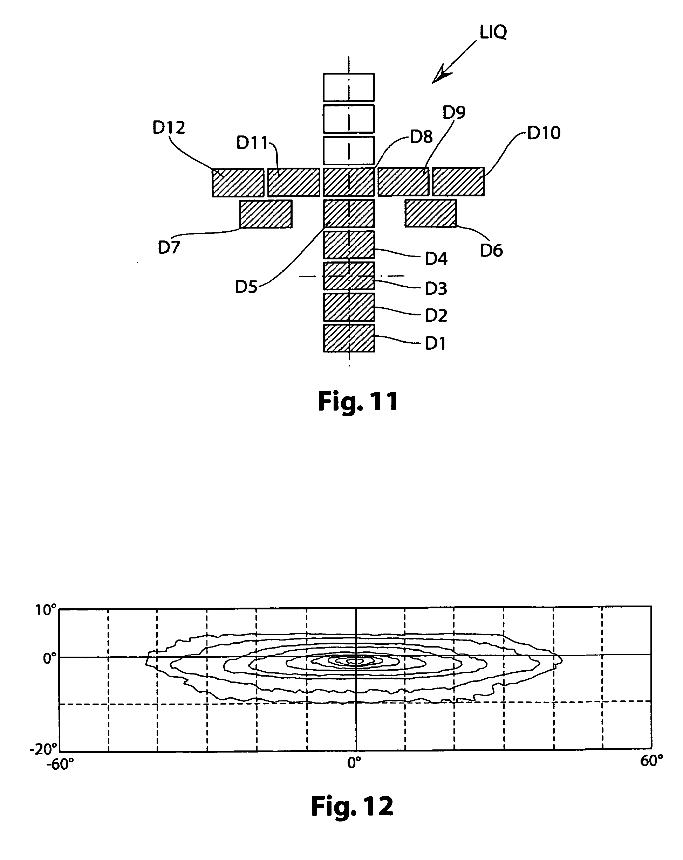

Bei Aktivieren der Leuchtdioden D1 - D12 wie in Figur 11 dargestellt ergibt sich eine Fernlichtverteilung (Figur 12).

Es kann auch vorteilhaft sein, dass bei Fernlicht die Leuchtdioden D1 und D2 abgeschaltet werden. Dies verringert, wie bekannt, das Vorfeld (Licht direkt vor dem Fahrzeug). Bei einer Fernlichtverteilung ist bzw. kann eine zu starke Vorfeldbeleuchtung unerwünscht (sein); außerdem wird dadurch auch die thermische Belastung des Leuchtdioden-Moduls reduziert.

Weiters ist es auch möglich, sofern vom Kunden gewünscht, die Vorfeldbeleuchtung durch Dimmen der Leuchtdioden D1 - D3, oder durch Dimmen von D1 und D2 zu reduzieren und nicht ganz auszublenden. Oder die Leuchtdiode D1 wird abgeschaltet und D2 (eventuell gemeinsame mit D3) gedimmt etc.....

Um noch eine Tagfahrlichtverteilung erzeugen zu können, ist bei einer konkreten Variante vorgesehen, dass anschließend an den dritten Lichtemissionsbereich LE3, LE3' ein vierter, sich entlang der Längsgeraden G3 von der zweiten Berechnungsgeraden weg erstreckender Lichtemissionsbereich LE4, LE4' vorgesehen ist.

Je nach Lichtstärke der verwendeten Leuchtdioden weist der vierte Lichtemissionsbereich LE4' eine längliche Erstreckung entlang der Längsgeraden G3 auf oder umfasst lediglich die Ausdehnung LE4 einer einzigen Leuchtdiode.

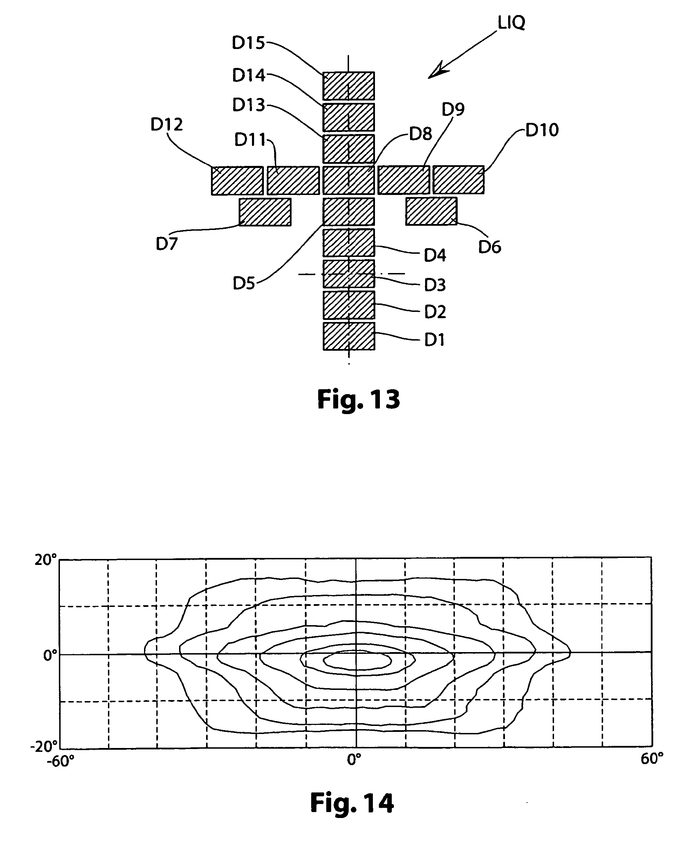

Eine Aktivierung aller Leuchtdioden D1 - D15 wie in Figur 13 dargestellt ergibt dann eine Tagfahrlichtverteilung wie in Figur 14 gezeigt, wobei anzumerken ist, dass in diesem Fall die Leuchtdioden D1- D15 entsprechend gedimmt sind.

Die verwendeten Leuchtdioden weisen (makroskopisch betrachtet) eine ebene Lichtaustrittsfläche auf, und die Lichtaustrittsflächen aller Leuchtdioden liegen in einer gemeinsamen Lichtquellenebene. Auf diese Weise ist die Lichtquelle einfach herzustellen und auch lichttechnisch gut beherrschbar.

Üblicherweise weisen dabei die Leuchtdioden D1 - D15 im Wesentlichen quadratische oder rechteckige Lichtaustrittsflächen auf, im Prinzip ist aber jede beliebige Form denkbar.

Um eine möglichst exakte, gesetzeskonforme Lichtverteilung zu erhalten, ist üblicherweise vorgesehen, dass ein Lichtemissionsbereich LE1, LE2, LE2', LE3, LE3', LE4, LE4' in seiner Quererstreckung genau aus einer Leuchtdiode D1 - D15 und in seiner Längserstreckung aus einer oder mehreren Leuchtdioden D1 - D15 besteht. "Quererstreckung" bezieht sich dabei auf die Erstreckung entlang der kürzeren, "Längserstreckung" auf jene entlang der längeren Seite, steht aber mit der Ausrichtung des Lichtemissionsbereiches an sich nicht in Zusammenhang.

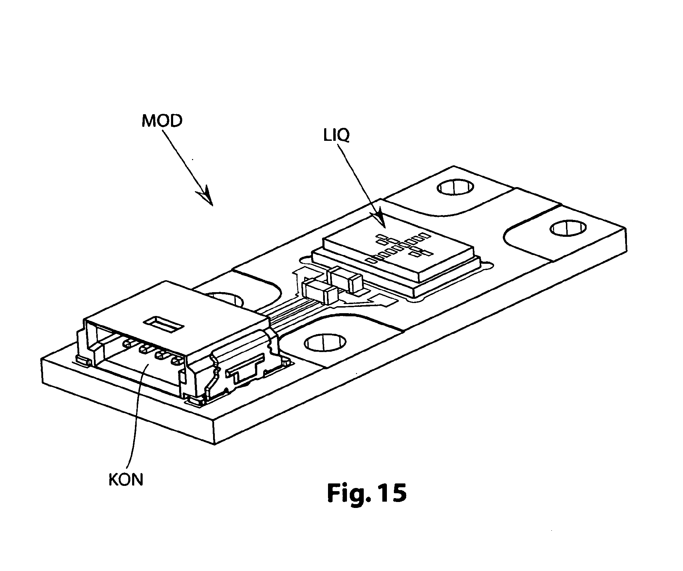

Die Lichtquelle LIQ ist wie in Figur 15 dargestellt mit Vorteil auf einem Modul MOD realisiert. Zur Ansteuerung und in dem gezeigten Fall auch für die Energieversorgung ist ein Kontakt KON vorgesehen.

Abschließend sei an dieser Stelle noch einmal auf die Figuren 2a - 2c verwiesen. Bei einer erfindungsgemäße Lichteinheit mit einer Lichtquelle LIQ wie oben an Hand der Figuren 3 und 4 und folgende beschrieben, bei welcher der Reflektor REF oberhalb der Lichtquelle LIQ angeordnet ist, ist die erste Begrenzungsgerade G1 dem Reflektor REF abgewandt und die zweite Berechnungsgerade G2 dem Reflektor REF zugewandt.

Bei einer Anordnung des Reflektors REF' wie in Figur 2b (bzw. in Figur 2c für die untere Hälfte) kann dieselbe Lichtquelle LIQ wie beschrieben verwendet werden. Die Lichtquelle LIQ ist dann allerdings um 180° um eine Normalachse auf die Ebene EB durch den Berechnungsmittelpunkt BMP zu drehen und anschließend um 180° um die Längsachse G3 zu drehen.

## Patentansprüche

1. Lichtquelle für einen Fahrzeugscheinwerfer bzw. eine Lichteinheit eines Fahrzeugscheinwerfers, wobei das von der Lichtquelle (LIQ, LIQ') emittierte Licht über einen Reflektor (REF, REF') in den Außenraum des Scheinwerfers bzw. der Lichteinheit reflektiert wird, und wobei die Lichtquelle (LIQ, LIQ') aus einer Anzahl von Leuchtdioden (D1 - D15) aufgebaut ist, welche Leuchtdioden (D1 - D15) einzeln und/oder in Gruppen zusammen gefasst ansteuerbar sind, wobei die Leuchtdioden (D1 - D15) in einer gemeinsamen Lichtquellenebene (EB, EB') liegen, und wobei je eine oder mehrere Leuchtdioden (D1 - D15) unterschiedliche Lichtemissionsbereiche (LE1, LE2, LE2', LE3, LE3', LE4, LE4') bilden,
**dadurch gekennzeichnet, dass**
die Lichtquellenebene (EB, EB') mittels einer ersten und einer zweiten Berechnungsgeraden (G1, G2), welche parallel zueinander verlaufen, in zwei Unterteilungsbereiche (I, II) unterteilt ist, wobei Licht, welches aus der Nähe der ersten Begrenzungsgerade (G1) stammt, in dem über den Reflektor (REF) abgebildeten Lichtbild im Wesentlichen die Begrenzung der Vorfeldlichtverteilung darstellt, und wobei Licht, welches aus der Nähe der zweiten Begrenzungsgerade (G2) stammt, im Lichtbild im Wesentlichen die Hell-Dunkel-Grenze darstellt, und wobei sich ein erster, länglicher Lichtemissionsbereich (LE1) entlang einer normal auf die Berechnungsgeraden (G1, G2) stehenden Längsgeraden (G3) im Wesentlichen von der ersten bis zur zweiten Berechnungsgeraden (G1, G2) erstreckt, und wobei der erste Lichtemissionsbereich (LE1) aus mehreren Leuchtdioden (D1 - D5) aufgebaut ist, und wobei sich zumindest die eine Leuchtdiode (D5), welche an jene Begrenzungsgerade (G2), welche die beiden Unterteilungsbereiche (I, II) voneinander trennt, angrenzt, und gegebenenfalls eine oder mehrere an diese zumindest eine Leuchtdiode (D5) anschließende weitere Leuchtdioden (D3, D4) unabhängig von den restlichen Leuchtdioden (D1, D2) des ersten Lichtemissionsbereichs ansteuern lassen.

2. Lichtquelle nach Anspruch 1, **dadurch gekennzeichnet, dass** sich weiters zu beiden Seiten der Längsgeraden (G3), unmittelbar oder mit Abstand anschließend an den ersten Lichtemissionsbereich (LE1), je ein zweiter Lichtemissionsbereich (LE2, LE2') im Wesentlichen parallel zu den Berechnungsgeraden (G1, G2) erstreckt.

3. Lichtquelle nach Anspruch 2, **dadurch gekennzeichnet, dass** die zweiten Lichtemissionsbereiche (LE2, LE2') vollständig in dem ersten, von den beiden Berechnungsgeraden (G1, G2) begrenzten Unterteilungsbereich (I) liegen und im Wesentlichen parallel zu der zweiten Berechnungsgeraden (G2) und unmittelbar oder mit geringem Abstand an diese anschließend liegen.

4. Lichtquelle nach einem der Ansprüche 1 bis 3, **dadurch gekennzeichnet, dass** ein dritter Lichtemissionsbereich (LE3, LE3') in dem zweiten Unterteilungsbereich (II) anschließend an den ersten Lichtemissionsbereich (LE1), von diesem durch die zweite Berechnungsgerade (G2) getrennt, vorgesehen ist.

5. Lichtquelle nach Anspruch 4, **dadurch gekennzeichnet, dass** der dritte Lichtemissionsbereich (LE3') eine längliche, sich parallel zu der zweiten Berechnungsgeraden (G2) und zu beiden Seiten der Längsgeraden (G3) erstreckende Gestalt aufweist.

6. Lichtquelle nach Anspruch 4 oder 5, **dadurch gekennzeichnet, dass** anschließend an den dritten Lichtemissionsbereich (LE3, LE3') ein vierter, sich entlang der Längsgeraden (G3) von der zweiten Berechnungsgeraden weg erstreckender Lichtemissionsbereich (LE4, L4') vorgesehen ist.

7. Lichtquelle nach Anspruch 6, **dadurch gekennzeichnet, dass** der vierte Lichtemissionsbereich (LE4') eine längliche Erstreckung entlang der Längsgeraden (G3) aufweist.

8. Lichtquelle nach einem der Ansprüche 1 bis 7, **dadurch gekennzeichnet, dass** die Leuchtdioden (D1 - D15) im Wesentlichen ebene Lichtaustrittsflächen aufweisen, welche parallel zu der Lichtquellenebene (EB) liegen.

9. Lichtquelle nach einem der Ansprüche 1 bis 8, **dadurch gekennzeichnet, dass** ein Lichtemissionsbereich (LE1, LE2, LE2', LE3, LE3', LE4, LE4') in seiner Quererstreckung genau aus einer Leuchtdiode (D1 - D15) und in seiner Längserstreckung aus einer oder mehreren Leuchtdioden (D1 - D15) besteht.

10. Lichtquelle nach einem der Ansprüche 1 bis 9, **dadurch gekennzeichnet, dass** Leuchtdioden (D1 - D15) eines Lichtemissionsbereiches (LE1, LE2, LE2', LE3, LE3', LE4, LE4') voneinander getrennt ansteuerbar sind.

11. Lichtquelle nach einem der Ansprüche 1 bis 10, **dadurch gekennzeichnet, dass** die erste Begrenzungsgerade (G1) in dem über den Reflektor (REF) abgebildeten Lichtbild im Wesentlichen die Begrenzung der Vorfeldlichtverteilung darstellt und die zweite Begrenzungsgerade (G2) im Wesentlichen die Hell-Dunkel-Grenze darstellt.

12. Lichtquelle nach Anspruch 11, **dadurch gekennzeichnet, dass** zur Ermittlung der Form des Reflektors (REF) lediglich der erste Lichtemissionsbereich (LE1) verwendet wird.

13. Lichtquelle nach einem der Ansprüche 1 bis 12, **dadurch gekennzeichnet, dass** alle die Lichtquelle (LIQ, LIQ') bildenden Leuchtdioden (D1 - D15) auf einem gemeinsamen Leuchtdioden-Modul (MOD) angeordnet sind.

14. Reflektor (REF, REF') mit einer Lichtquelle (LIQ, LIQ') nach einem der Ansprüche 1 bis 13 für eine Lichteinheit bzw. einen Scheinwerfer für ein Fahrzeug,
**dadurch gekennzeichnet, dass** zur Ermittlung der Form des Reflektors (REF) lediglich der erste Lichtemissionsbereich (LE1) verwendet ist.

15. Lichteinheit mit einer Lichtquelle (LIQ) nach einem der Ansprüche 1 bis 13 und mit zumindest einem Reflektor (REF, REF'), wobei der zumindest eine Reflektor (REF, REF') sich im Wesentlichen oberhalb/unterhalb der Lichtquellenebene (EB) erstreckt, wobei die erste Begrenzungsgerade (G1) dem Reflektor (REF, REF') abgewandt/zugewandt und die zweite Berechnungsgerade (G2) dem Reflektor (REF, REF') zugewandt/abgewandt ist, und wobei die Lichtabstrahlrichtung der Lichtquelle (LIQ, LIQ') im Wesentlichen nach oben/unten gerichtet ist.

16. Lichteinheit nach Anspruch 15, **gekennzeichnet durch** einen Reflektor (REF) oberhalb und einen Reflektor (REF') unterhalb einer Lichtquellenebene (EB), sowie mit je einer dem jeweiligen Reflektor (REF, REF') zugeordneten Lichtquelle (LIQ, LIQ').

17. Scheinwerfer mit zumindest einer Lichteinheit nach Anspruch 15 oder 16.

## Claims

1. A light source for a vehicle headlamp or a light unit of a vehicle headlamp, with the light emitted by the light source (LIQ, LIQ') being reflected via a reflector (REF, REF') into the outer space of the headlamp or the light unit, and with the light source (LIQ, LIQ') being composed of a number of light-emitting diodes (D1-D15), which light-emitting diodes (D1-D15) can be triggered individually and/or combined in groups, with the light-emitting diodes (D1-D15) being disposed in a common light source plane (EB, EB'), and with one or several of the light-emitting diodes (D1-D15) forming different light-emission areas (LE1, LE2, LE2', LE3, LE3', LE4, LE4'), **characterized in that** the light source plane (EB, EB') is subdivided into two subdivision areas (I, II) by means of a first and second calculation straight line (G1, G2) which extend parallel with respect to each other, with light originating from the vicinity of the first limitation straight line (G1) substantially representing the delimitation of the pre-field light distribution in the light image projected via the reflector (REF), and with light originating from the vicinity of the second limitation straight line (G2) substantially representing the light-dark cut-off in the light image, and with a first elongated light-emission area (LE1) extending substantially from the first to the second calculation straight line (G1, G2) along a longitudinal straight line (G3) standing normally to the calculation straight line (G1, G2), and with the first light-emission area (LE1) being composed of several light-emitting diodes (D1-D5), and with at least one light-emitting diode (D5) adjacent to the limitation straight line (G2) separating the two subdivision areas (I, II) and optionally one or several further light-emitting diodes (D3, D4) adjacent to said at least one light-emitting diode (D5) being triggerable independent of the remaining light-emitting diodes (D1, D2) of the first light-emission area.

2. A light source according to claim 1, **characterized in that** further one respective light-emission area (LE2, LE2') extends substantially parallel to the calculation straight lines (G1, G2) on both sides of the longitudinal straight line (G3), directly or at a distance adjacent to the first light-emission area (LE1).

3. A light source according to claim 2, **characterized in that** the second light-emission areas (LE2, LE2') lie completely in the first subdivision area (I) delimited by the two calculation straight lines (G1, G2) and lie substantially parallel to the second calculation straight line (G2) and directly or at a small distance adjacent to the same.

4. A light source according to one of the claims 1 to 3, **characterized in that** a third light-emission area (LE3, LE3') is provided in the second subdivision area (II) adjacent to the first light-emission area (LE1), separated from the same by the second calculation straight line (G2).

5. A light source according to claim 4, **characterized in that** the third light-emission area (LE3') has an elongated shape which extends parallel to the second calculation straight line (G2) and on both sides of the longitudinal straight line (G3).

6. A light source according to claim 4 or 5, **characterized in that** a fourth light-emission area (LE4, LE4') is provided adjacent to the third light-emission area (LE3, LE3'), which fourth light-emission area extends along the longitudinal straight line (G3) away from the second calculation straight line.

7. A light source according to claim 6, **characterized in that** the fourth light-emission area (LE4') has an elongated extension along the longitudinal straight line (G3).

8. A light source according to one of the claims 1 to 7, **characterized in that** the light-emitting diodes (D1-D15) substantially have planar light outlet areas which are disposed parallel to the light source plane (EB).

9. A light source according to one of the claims 1 to 8, **characterized in that** a light-emission area (LE1, LE2, LE2', LE3, LE3', LE4, LE4') consists in its transverse extension precisely of one light-emitting diode (D1-D15) and in its longitudinal extension of one or several light-emitting diodes (D1-D15).

10. A light source according to one of the claims 1 to 9, **characterized in that** the light-emitting diodes (D1-D15) of a light-emission area (LE1, LE2, LE2', LE3, LE3', LE4, LE4') can be triggered separately from one another.

11. A light source according to one of the claims I to 10, **characterized in that** the first limitation straight line (G1) in the light image projected via the reflector (REF) substantially represents the limitation of the pre-field light distribution and the second limitation straight line (G2) substantially represents the light-dark cut-off.

12. A light source according to claim 11, **characterized in that** only the first light-emission area (LE1) is used for determining the shape of the reflector (REF).

13. A light source according to one of the claims 1 to 12, **characterized in that** all light-emitting diodes (D1-D15) forming the light source (LIQ, LIQ') are arranged on a common light-emitting diode module (MOD).

14. A reflector (REF, REF') with a light source (LIQ, LIQ') according to one of the claims 1 to 13 for a light unit or a headlamp for a vehicle, **characterized in that** only the first light-emission area (LE1) is used for determining the shape of the reflector (REF).

15. A light unit with a light source (LIQ) according to one of the claims 1 to 13 and with at least one reflector (REF, REF'), with the at least one reflector (REF, REF') extending substantially above/below the light source plane (EB), with the first limitation straight line (G1) facing towards / facing away from the reflector (REF, REF') and the second calculation straight line (G2) facing towards / facing away from the reflector (REF, REF'), and with the light emission direction of the light source (LIQ, LIQ') being directed substantially upwardly / downwardly.

16. A light unit according to claim 15, **characterized by** one reflector (REF) above and one reflector (REF') below a light source plane (EB), and with one respective light source (LIQ, LIQ') associated with the respective reflector (REF, REF').

17. A headlamp with at least one light unit according to claim 15 or 16.

## Revendications

1. Source de lumière pour un phare de véhicule ou pour une unité de lumière d'un phare de voiture, sachant que la lumière émise par la source de lumière (LIQ, LIQ') est réfléchie par l'intermédiaire d'un réflecteur (REF, REF') dans l'espace extérieur du phare ou de l'unité de lumière, et sachant que la source de lumière (LIQ, LIQ') est constituée d'un certain nombre de diodes électroluminescentes (D1-D15), lesquelles peuvent être commandées de manière individuelle ou de manière groupée, sachant que les diodes électroluminescentes (D1-D15) se trouvent dans un plan commun de sources de lumière (EB, EB'), et sachant que chaque diode électroluminescente ou plusieurs diodes électroluminescentes (D1-D15) forment diverses zones d'émission de lumière (LE1, LE2, LE2', LE3, LE3', LE4, LE4'),
**caractérisée en ce que**
le plan des sources de lumière (EB, EB') est subdivisé en deux zones de subdivision (I, II) au moyen d'une première ligne droite de délimitation et d'une deuxième ligne droite de délimitation (G1, G2), lesquelles lignes droites de délimitation s'étendent de manière parallèle l'une par rapport à l'autre, sachant que la lumière en provenance du voisinage de la première ligne droite de délimitation (G1) constitue dans l'image lumineuse reproduite par l'intermédiaire du réflecteur (REF) essentiellement la délimitation de la répartition lumineuse du champ en amont, et sachant que la lumière en provenance du voisinage de la deuxième ligne droite de délimitation (G2) constitue dans l'image lumineuse essentiellement la limite du clair-obscur, et sachant qu'une première zone d'émission de lumière allongée (LE1) s'étend le long d'une ligne droite longitudinale (G3) se trouvant normalement sur les lignes droites de délimitation (G1, G2) essentiellement de la première jusqu'à la deuxième ligne droite de délimitation (G1, G2), et sachant que la première zone d'émission de lumière (LE1) est constituée de plusieurs diodes électroluminescentes (D1-D15), et sachant qu'au moins la diode électroluminescente (D5) au moins au nombre de une se trouve à proximité de la ligne droite de délimitation (G2) qui sépare l'une de l'autre les deux zones de subdivision (I, II), et qu'éventuellement une ou plusieurs autres diodes électroluminescentes (D3, D4) se raccordant à la diode électroluminescente (D5) au moins au nombre de une se laissent commander indépendamment des autres diodes électroluminescentes restantes (D1, D2) de la première zone d'émission de lumière.

2. Source de lumière selon la revendication 1, **caractérisée en ce qu'**en outre des deux côtés des lignes droites longitudinales (G3), se raccordant directement ou à distance à la première zone d'émission de lumière (LE1), une deuxième zone d'émission de lumière (LE2, LE2') s'étend essentiellement de manière parallèle par rapport aux lignes droites de délimitation (G1, G2).

3. Source de lumière selon la revendication 2, **caractérisée en ce que** les deuxièmes zones d'émission de lumière (LE2, LE2') se trouvent complètement dans la première zone de subdivision (I) délimitée par les deux lignes droites de délimitation (G1, G2), et **en ce que** ce qu'elles sont essentiellement parallèles par rapport à la deuxième ligne droite de délimitation (G2) tout en étant raccordées directement ou à une certaine distance à cette dernière.

4. Source de lumière selon l'une quelconque des revendications 1 à 3, **caractérisée en ce qu'**une troisième zone d'émission de lumière (LE3, LE3') est prévue dans la deuxième zone de subdivision (II), la troisième zone d'émission de lumière se raccordant à la première zone d'émission de lumière (LE1) et étant séparée de cette dernière par la deuxième ligne droite de délimitation (G2).

5. Source lumineuse selon la revendication 4, **caractérisée en ce que** la troisième zone d'émission de lumière (LE3') présente une configuration allongée, s'étendant de manière parallèle par rapport à la deuxième ligne droite de délimitation (G2) et aux deux côtés des lignes droites longitudinales (G3).

6. Source de lumière selon la revendication 4 ou 5, **caractérisée en ce qu'**une quatrième zone d'émission de lumière (LE4, LE4') s'étendant le long des lignes droites longitudinales (G3) et à distance des deux lignes droites de délimitation est prévue se raccordant à la troisième zone d'émission de lumière (LE3, LE3').

7. Source de lumière selon la revendication 6, **caractérisée en ce que** la quatrième zone d'émission de lumière (LE4') présente une extension longitudinale le long des lignes droites longitudinales (G3).

8. Source de lumière selon l'une quelconque des revendications 1 à 7, **caractérisée en ce que** les diodes électroluminescentes (D1-D15) présentent essentiellement des surfaces de sortie de lumière planes, lesquelles se trouvent de manière parallèle par rapport au plan des sources de lumière (EB).

9. Source de lumière selon l'une quelconque des revendications 1 à 8, **caractérisée en ce qu'**une zone d'émission de lumière (LE1, LE2, LE2', LE3, LE3', LE4, LE4') se compose dans son extension transversale précisément d'une diode électroluminescente (D1-D15) et dans son extension longitudinale d'une ou de plusieurs diodes électroluminescentes (D1- D15).

10. Source de lumière selon l'une quelconque des revendications 1 à 9, **caractérisée en ce que** les diodes électroluminescentes (D1-D15) d'une zone d'émission de lumière (LE1, LE2, LE2', LE3, LE3', LE4, LE4') peuvent être commandées de manière séparée les unes par rapport aux autres.

11. Source de lumière selon l'une quelconque des revendications 1 à 10, **caractérisée en ce que** la première ligne droite de délimitation (G1) constitue dans l'image lumineuse reproduite par l'intermédiaire du réflecteur (REF) essentiellement la délimitation de la répartition lumineuse du champ en amont, et **en ce que** la deuxième ligne droite de délimitation (G2) constitue essentiellement la limite de clair-obscur.

12. Source de lumière selon la revendication 11, **caractérisée en ce qu'**on utilise pour déterminer la forme du réflecteur (REF) uniquement la première zone d'émission de lumière (LE1).

13. Source de lumière selon l'une quelconque des revendications 1 à 12, **caractérisée en ce que** toutes les diodes électroluminescentes (D1-D15) formant la source de lumière (LIQ, LIQ') sont disposées sur un module commun de diodes électroluminescentes (MOD).

14. Réflecteur (REF, REF') comportant une source de lumière (LIQ, LIQ') selon l'une quelconque des revendications 1 à 13 pour une unité de lumière ou pour un phare d'un véhicule, **caractérisé en ce qu'**on utilise pour déterminer la forme du réflecteur (REF) uniquement la première zone d'émission de lumière (LE1).

15. Unité de lumière comportant une source de lumière (LIQ) selon l'une quelconque des revendications 1 à 13 et comportant au moins un réflecteur (REF, REF'), sachant que le réflecteur (REF, REF') au moins au nombre de un s'étend essentiellement au-dessus/au-dessous du plan de sources de lumière (EB), sachant que la première ligne droite de délimitation (G1) est opposée au réflecteur (REF, REF')/tournée vers celui-ci et que la deuxième ligne droite de délimitation (G2) est tournée vers le réflecteur (REF, REF')/opposée à celui-ci, et sachant que la direction de rayonnement de la lumière de la source de lumière (LIQ, LIQ') est orientée essentiellement vers le haut/le bas.

16. Unité de lumière selon la revendication 15, **caractérisée par** un réflecteur (REF) au-dessus et par un réflecteur (REF') au-dessous d'un plan de sources de lumière (EB), et comportant respectivement une source de lumière (LIQ, LIQ') associée au réflecteur respectif (REF, REF').

17. Phare comportant au moins une unité de lumière selon la revendication 15 ou 16.
